# FASCICULE DE BREVET EUROPEEN

(11) **EP 2 379 320 B1**
(45) Date de publication et mention de la délivrance du brevet: **12.06.2013**
(21) Numéro de dépôt: 09796698.0
(22) Date de dépôt: 16.12.2009
(51) Int. Cl.: B31C 3/00, B32B 1/08, B32B 7/12, B32B 29/00, D21H 27/32

(54) **PROCEDE DE FABRICATION D'UNE FEUILLE DE PAPIER DELITABLE, UTILISATION DE LA FEUILLE POUR LA FABRICATION D'UN MANDRIN FORMANT SUPPORT DE ROULEAU, FEUILLE DE PAPIER DELITABLE ET MANDRIN CONSTITUE D'AU MOINS UNE DESDITES FEUILLES**
VERFAHREN ZUR HERSTELLUNG EINES IN WASSER LÖSLICHEN PAPIERBOGENS, VERWENDUNG DES BOGENS ZUR HERSTELLUNG EINER ROLLENHALTERHÜLSE, LÖSLICHER PAPIERBOGEN UND ROLLENHÜLSE, DIE MINDESTENS AUS EINEM BOGEN GEBILDET WIRD
METHOD OF MANUFACTURING A SHEET OF DISINTEGRABLE PAPER, USE OF SAID SHEET FOR MANUFACTURING A ROLL SUPPORT CORE, DISINTEGRABLE PAPER SHEET AND CORE CONSISTING OF AT LEAST ONE OF SAID SHEETS

(30) Priorité: 18.12.2008 FR 0858809
(43) Date de publication de la demande: 26.10.2011
(73) Titulaire: SCA TISSUE FRANCE, 92270 Bois-Colombes (FR)
(72) Inventeur: WEISANG, Nicolas, F-68000 Colmar (FR); ROESCH, Frédéric, F-68000 Colmar (FR); HOEFT, Benoît, F-68320 Bischwihr (FR)
(74) Mandataire: Cortier, Sophie
(86) Numéro de dépôt international: PCT/EP2009/067324
(87) Numéro de publication internationale: WO 2010/070009

(56) Documents cités:
- EP-A- 1 459 876
- WO-A-00/06462
- WO-A-02/47998
- DE-A1- 4 431 755
- US-A1- 2002 096 287

## Description

La présente invention concerne la fabrication d'une feuille de papier délitable et son utilisation pour la fabrication d'un mandrin formant support de rouleau. Elle vise en particulier le domaine des papiers à usage sanitaire ou domestique, conditionnés en rouleaux avec mandrin.

Les papiers à usage sanitaire ou domestique, tels que le papier toilette, le papier d'essuyage ou l'essuie tout sont conditionnés pour certains en rouleaux avec mandrin.

Le mandrin est un cylindre, généralement en carton, que l'on jette après que l'on a consommé le papier du rouleau. Le mandrin remplit plusieurs fonctions :

Il sert de support sur lequel la feuille de papier est enroulée à la fabrication du rouleau. En général les rouleaux sont fabriqués à partir d'une feuille mère de grande largeur qui est enroulée autour d'un tube de longueur correspondante, et le rouleau obtenu est scié en rouleaux individuels à la largeur voulue.

Il maintient le trou central ouvert en résistant aux contraintes internes du rouleau et en empêchant l'affaissement des spires internes de l'enroulement.

Il maintient le rouleau en forme en résistant aux efforts d'écrasement le long de son axe ou transversaux auxquels le rouleau est soumis pendant le transport ou lors des différentes manipulations avant sa mise en service.

Le mandrin est généralement obtenu par enroulement en hélice et collage d'une ou plusieurs bandes de carton autour d'une forme cylindrique.

Le carton plat est un matériau peu onéreux et pouvant être constitué de fibres recyclées. Il est en outre léger et sa résistance mécanique est suffisante pour cet usage.

Il présente cependant l'inconvénient de ne pouvoir être réutilisé ou valorisé sous une autre forme après consommation du rouleau et de devenir un déchet.

Dans le cas d'un papier toilette, éliminer le mandrin standard en tentant de l'évacuer avec les eaux usées n'est pas recommandé car, bien que constitué majoritairement de fibres papetières, il se délite lentement au contact de l'eau et forme un bouchon avant qu'il ait pu être chassé par le courant.

La demanderesse s'est fixé comme objectif la réalisation d'un mandrin pour rouleau qui puisse être évacué aisément avec les eaux usées d'une installation sanitaire domestique.

Plus particulièrement :
- Le mandrin doit se déliter au contact de l'eau.
- Le matériau doit se déliter dans l'eau à une vitesse suffisante pour qu'il soit évacué avant de former un bouchon ; la vitesse à laquelle il se délite doit être comparable à celle du papier tissue qui constitue le rouleau.
- Le mandrin doit présenter une résistance à l'écrasement, aussi bien radiale qu'axiale, du même ordre de grandeur que celle du carton qu'il vise à substituer.
- Le mandrin doit être aussi peu onéreux à produire que les mandrins en carton de l'art antérieur.
- Le mandrin doit respecter l'environnement.

La fabrication du mandrin passe par la fabrication de la feuille de papier qui le constitue.

Ainsi, l'invention a comme premier objectif un procédé de fabrication d'une feuille de papier présentant la propriété d'être délitable dans l'eau.

Conformément à l'invention, le procédé de fabrication d'une feuille de papier délitable dans l'eau comprend les étapes suivantes : fournir au moins une bande de matériau liant hydrosoluble sous la forme d'un film sec, fournir au moins deux bandes formées chacune d'au moins un pli d'ouate de cellulose, disposer la bande de matériau liant hydrosoluble entre les deux bandes d'ouate de cellulose, humidifier, assembler et presser les trois bandes, sécher la bande complexe obtenue.

La bande complexe obtenue n'est pas limitée à deux bandes d'ouate de cellulose. On assemble plus généralement au moins deux bandes de matériau liant hydrosoluble avec au moins trois bandes d'ouate de cellulose, les bandes de matériau liant hydrosoluble étant interposées entre les bandes d'ouate de cellulose. Ainsi la feuille finie obtenue peut comporter jusqu'à par exemple 24 plis d'ouate de cellulose, de préférence jusqu'à 10 plis.

Le mode d'application du ou des films peut varier. Il en est de même de l'humidification du film. Par exemple selon un mode de réalisation, le procédé comprend au moins une étape selon laquelle on dispose une bande de matériau liant hydrosoluble sur une bande d'ouate de cellulose et on humidifie la bande de matériau liant hydrosoluble avant de poser une bande d'ouate de cellulose sur ladite bande de matériau liant hydrosoluble

Conformément à une caractéristique, la feuille comprend une quantité de liant hydrosoluble représentant à sec entre 20 et 70% et de préférence entre 25 et 50% en poids de la feuille finie.

Selon un mode de réalisation, le liant hydrosoluble comprend de l'amidon qui est susceptible de conférer à la feuille à la fois résistance à sec et solubilité dans l'eau.

Conformément à une caractéristique, le grammage de la feuille finie est compris entre 80 et 400 g/m².

Conformément à une autre caractéristique, on calandre la feuille avant séchage ou après séchage pour obtenir une feuille d'épaisseur comprise entre 0,3 et 1,2 mm, de préférence entre 0,4 et 0,5 mm.

On utilise la feuille ainsi obtenue pour la fabrication d'un mandrin support de rouleau par enroulement en hélice autour d'un cylindre d'une ou plusieurs bandes venues de ladite feuille.

La structure du mandrin présente l'avantage de permettre une délitabilité contrôlée, combinée à une résistance comparable à celle du carton.

La présente invention porte également sur une feuille de papier délitable dans l'eau, obtenue selon le procédé, de grammage compris entre 80 et 400 g/m² contenant de 20 à 70% d'un liant hydrosoluble tel que l'amidon.

L'invention a encore pour objet un mandrin pour rouleau, constitué d'un enroulement en hélice d'une ou plusieurs bandes de papier constituée d'une feuille de papier selon l'invention.

On décrit maintenant plus en détail des exemples de réalisation non limitatifs de l'invention, en référence aux dessins annexés sur lesquels :
la figure 1 montre le schéma d'une première installation vue en élévation latérale utilisée pour la fabrication d'une feuille de papier avec interposition d'un film hydrosoluble, apte à la réalisation d'un mandrin conforme à l'invention.
la figure 2 montre une première variante de réalisation avec un mode différent d'application de l'eau sur le film hydrosoluble,
la figure 3 montre une autre variante avec un autre mode d'application de l'eau sur le film hydrosoluble,
la figure 4 montre une autre variante d'agencement des cylindres permettant la réalisation d'une feuille à partir de cinq bandes d'ouate de cellulose,
la figure 5 représente vue en coupe transversale la structure d'un exemple de réalisation de feuille complexe obtenue selon l'invention.

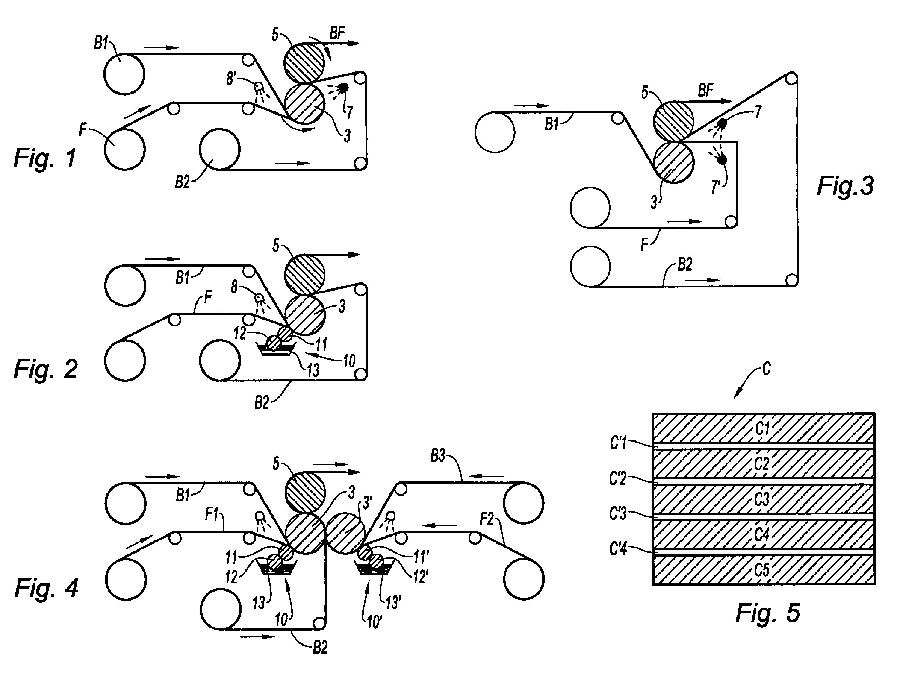

Selon l'exemple de fabrication illustré sur la figure 1, l'installation comprend deux cylindres superposés, d'axes parallèles et mobiles en rotations autour de leur axe respectif : un cylindre en acier lisse 3 et un cylindre 5 en caoutchouc ou autre matériau. Les deux cylindres roulent l'un sur l'autre. Deux bandes d'ouate de cellulose, B1 et B2 respectivement, sont déroulées depuis des bobines d'alimentation. Les bandes d'ouate de cellulose sont formées d'au moins un pli, de préférence un ou deux. La bande B1 est guidée jusque sur le cylindre 3 sur lequel elle est appliquée. La bande B2 est guidée jusque sur le cylindre 5, au niveau de l'intervalle séparant ce dernier avec le cylindre 3. Une bande de matériau liant hydrosoluble sous la forme d'un film hydrosoluble F, disposée entre les deux bandes B1 et B2, est guidée depuis une bobine d'alimentation jusque sur le cylindre 3 où elle est appliquée contre la bande B1. Un premier applicateur de liquide 7, de l'eau, projette une quantité mesurée d'eau en direction de la bande F, alors que celle - ci est en appui contre la bande B1 sur le cylindre 3. Le liant déposé sous forme de film réagit avec l'eau appliquée. Par la rotation du cylindre 3, les deux bandes B1 et F humidifiées parviennent dans l'intervalle entre les deux cylindres où la bande B2 les rejoint et se superpose à la bande F. Le film se trouve ainsi pris en sandwich entre les deux bandes. En raison de l'humidité et du serrage dans l'intervalle, la bande d'ouate de cellulose B2 se solidarise à la bande B1 à travers le film hydrosoluble F rendu poisseux à l'état humidifié.

En sortie du cylindre 5, la bande complexe BF est guidée depuis les deux cylindres 3 et 5 jusque, de manière facultative vers une station de calandrage, non représentée, et une station de séchage appropriée. Si on souhaite une feuille épaisse, on guide la bande BF vers une autre station où l'on applique une autre bande formée d'un film de matériau liant hydrosoluble et une autre bande d'ouate de cellulose avec application d'un liquide pour humidifier le film et permettre l'association par pressage.

On associe ainsi autant de bandes d'ouate de cellulose avec interposition de bandes de film hydrosoluble que nécessité par la résistance et l'épaisseur souhaitées de la feuille complexe.

Lorsque la bande F est assez épaisse, il peut être souhaitable pour une bonne adhésion du film avec l'ouate de cellulose, de projeter de l'eau en quantité dosée sur les deux faces du film. L'eau peut être appliquée sous forme liquide ou vapeur.

On adapte le pressage et le séchage, éventuellement le calandrage pour obtenir l'épaisseur et la résistance finales souhaitées pour le produit.

La feuille produite ainsi en continu est mise en rouleau pour une utilisation ultérieure.

On détermine les paramètres de fabrication de la feuille BF de façon à obtenir un mandrin présentant les propriétés souhaitées.

Les fibres utilisées sont des fibres papetières longues, courtes ou recyclées ainsi que leur mélange.

Pour chaque bande d'ouate de cellulose, le grammage est compris entre 15 et 50 g/m², de préférence entre 30 et 40 g/m².

Conformément à un mode préféré de réalisation le liant hydrosoluble est l'amidon.

L'amidon comprend les produits naturels d'origine végétale tels que les amidons de blé, de maïs, de pomme de terre, de riz, tapioca, sorgho, et autres, constitués par des polymères ou polyholosides de poids moléculaires élevés. On entend également par amidon, des produits dérivés d'amidon naturel, transformés par traitement physique, par exemple chauffage, traitement physico-chimique ou traitement biologique par exemple enzymatique, et des amidons dérivés ou modifiés tels que des amidons cationiques, anioniques, amphotères, non-ioniques ou réticulés et les produits résultant de l'hydrolyse de l'amidon tels que les maltodextrines.

L'amidon est choisi de manière à ce que sa vitesse de dissolution soit appropriée avec la quantité d'eau apportée.

D'autres liants sont envisageables dans la mesure où ils remplissent la même fonction. Il peut s'agir par exemple d'un alcool polyvinylique. On peut aussi incorporer d'autres additifs permettant une fonction supplémentaire, tels que des agents désinfectants, des agents nettoyants ou des parfums.

De préférence le liant est coloré afin de permettre un contrôle de la bonne répartition du liant sur les 2 faces. En plus il présente un atout esthétique.

La quantité de liant dans la feuille est comprise entre environ 20% et environ 70 % de la masse totale de la feuille.

La feuille calandrée en aval de la presse présente une épaisseur comprise entre 0,3 et 1,2 mm.

L'incorporation de liant hydrosoluble sous forme de film à sec présente l'avantage de rendre les manipulations plus aisées.

La figure 2 montre une variante de réalisation de l'invention. On retrouve les deux cylindres 3 et 5, et la même alimentation des deux cylindres. On applique ici l'eau au moyen d'un applicateur 10. Il comprend un cylindre tramé 12 plongeant dans une réserve d'eau 13 avec transfert sur un cylindre applicateur 11 lisse qui dépose une quantité mesurée d'eau sur la bande F. Le cylindre applicateur 11 appuie sur le cylindre 3 au travers de l'ensemble B1 et F. Le cas échéant une quantité d'eau supplémentaire est appliquée par un pulvérisateur 8 sur la face opposée du film F avant qu'il soit mis en appui sur le cylindre 3.

La figure 3 montre une autre variante, où la bande formée du film hydrosoluble est introduite directement dans l'intervalle entre les deux cylindres 3 et 5, et contre lesquels les bandes d'ouate de cellulose sont appuyés. La bande F est en outre, avant son association avec les deux bandes d'ouate de cellulose B1 et B2, humidifiée par deux pulvérisateurs 7 et 7' d'eau, disposés de part et d'autre de la bande

La figure 4 montre une installation permettant de fabriquer directement un papier hydrosoluble à partir de trois bandes de papier B1, B2 et B3. Chacune des bandes est déroulée depuis une bobine mère, et est formée d'au moins un pli d'ouate de cellulose.

Par rapport aux installations précédentes, on a ajouté un deuxième cylindre 3' qui roule sur le cylindre 3. Les bandes d'ouate de cellulose B1 et B3 sont guidées respectivement vers les cylindres 3 et 3'. On applique sur chacune de ces deux bandes une bande de film hydrosoluble F1 et F2 respectivement. En même temps on applique une quantité dosée d'eau sur la surface libre des films par les deux applicateur 10 et 10'. Comme dans l'installation de la figure 2, les applicateurs 10 et 10' sont à cylindres plongeur 12, 12' dans une réserve d'eau 13, 13'. L'eau ainsi prélevée est déposée par les cylindres enducteurs 11 et 11' sur la surface libre des films F1 et F2. La troisième bande d'ouate de cellulose B2 est guidée dans l'intervalle ménagé entre les deux cylindres 3 et 3. Deux applicateurs d'appoint sont éventuellement disposés de manière à humidifier la face opposée des films hydrosolubles F1 et F2.

Les bandes sont assemblées entre les deux cylindres 3 et 3', puis l'ensemble passe entre le cylindre 3 et le cylindre en caoutchouc 5 pour subir un pressage.

### Fabrication du mandrin

La feuille de papier ainsi formée est découpée en bandes de faible largeur qui sont enroulées en hélice autour d'une forme cylindrique. Un adhésif est appliqué sur les parties des spires qui se superposent pour les lier entre elles et former un tube.

La technique de fabrication des mandrins est connue en soi. Elle est adaptée à la nature du liant, dans la mesure où il faut prendre en compte la délitabilité rapide des bandes par la colle utilisée pour associer les brins.

Sur la figure 5 on a représenté en coupe transversale un exemple de réalisation de feuille complexe délitable C selon le procédé de l'invention.

Cette structure est constituée de l'empilement de 5 plis Cn : C1 à C5 d'ouate de cellulose associés entre eux par 4 couches adhésives C'n : C'1 à C'4, constituées chacune à partir d'un film hydrosoluble à base d'alcool polyvinylique. Le film utilisé était de type BT (basse température) commercialisé par la société Plasticos Hidrosolubles.

Chacune des couches Cn d'ouate de cellulose possède un grammage de 34 g/m².

Le poids de chacune des couches C'n était de 26g/m².

On détermine que la feuille complexe obtenue incorpore 0,61 g de liant hydrosoluble par gramme d'ouate de cellulose.

Une telle feuille convient bien, après avoir été découpée en bande, à la fabrication de mandrin pour rouleau de papier.

### Tests de compression et de délitabilité

On a ensuite fabriqué un mandrin cylindrique à partir de deux feuilles précédemment formées.

Diamètre et longueur du cylindre formant le mandrin : 40 mm /97mm

### Test de compression :

On a mesuré la résistance en compression à plat et sur chant du mandrin, en utilisant la méthode suivante.

On découpe d'abord le mandrin à tester selon une portion cylindrique délimitée par deux faces opposées, perpendiculaires à l'axe du cylindre, ladite portion possédant une longueur de 50 mm selon une direction parallèle à l'axe.

On positionne ensuite cette portion cylindrique entre les deux plateaux métalliques d'un dynamomètre, lesdits plateaux étant parallèles entre eux et écartés au départ d'une distance légèrement supérieure à la longueur de la portion cylindrique, dans le cas de la mesure de la compression sur chant, ou à son diamètre, dans le cas de la mesure de la compression à plat.

Dans la mesure de compression sur chant, la portion cylindrique est disposée de manière à orienter l'axe du cylindre selon une direction perpendiculaire au plan formé par l'un ou l'autre des plateaux.

Dans la mesure de compression à plat, la portion cylindrique est disposée de manière à orienter l'axe du cylindre selon une direction parallèle au plan formé par l'un ou l'autre des plateaux.

On comprime ensuite ladite portion cylindrique entre les deux plateaux, avec des mesures pour une distance de compression à laquelle on relève la force en newton.

On mesure concomitamment la résistance opposée par le mandrin jusqu'à son maximum, c'est-à-dire juste avant que le mandrin ne se déstructure de manière irréversible.

Les résultats ont été comparés à ceux d'un mandrin témoin en carton de type un brin avec une paroi de grammage 365 g/m².

On a constaté donc qu'un mandrin selon l'invention contenant 0, 6 g de liant par g de fibres présentait une résistance sur chant au moins similaire, voire supérieure, à celle d'un mandrin carton, avec une amélioration de la résistance en compression.

Etant donné que les principales contraintes subies par le mandrin durant son cycle de production et de distribution du rouleau s'exercent essentiellement à plat, on peut considérer que le mandrin de l'invention répond totalement aux besoins à ce niveau.

### Test de délitabilité :

On a mesuré le pouvoir de délitabilité du mandrin tel que fabriqué ci-dessus, conformément à la norme NF Q34-020.

On constate qu'il se défait très facilement.

On observe également que le mandrin selon l'invention commence à se déliter dans l'eau plus rapidement qu'un mandrin similaire en carton obtenu par l'enroulement d'une seule bande de carton possédant un grammage de 280 g/m².

Le mandrin selon l'invention se délite plus rapidement donc qu'un mandrin similaire en carton, formé d'une seule bande de grammage égal à 280 g/m², que ce soit sous agitation ou sans agitation.

Par mandrin similaire, il faut entendre un mandrin possédant sensiblement le même diamètre et la même longueur que le mandrin de l'invention.

Par ailleurs à titre de comparaison encore on a mesuré au test Afnor NF Q34-020 que les spires d'un mandrin en carton de 400 g/m² (2-brins) se décollaient après 30/60 secondes, le mandrin commençant à se déliter au bout de 3 minutes. Il se délitait complètement au bout de 10 minutes mais il restait des morceaux de carton.

## Revendications

1. Procédé de fabrication d'une feuille de papier délitable dans l'eau comprenant les étapes suivantes : fournir au moins une bande de matériau liant hydrosoluble (F) sous la forme d'un film sec, fournir au moins deux bandes (B1, B2) formées chacune d'au moins un pli d'ouate de cellulose, disposer la bande de matériau liant hydrosoluble entre les deux bandes d'ouate de cellulose, humidifier (7, 7', 8, 10, 10'), assembler (3, 5) et presser les trois bandes, sécher la bande complexe obtenue.

2. Procédé selon la revendication précédente selon lequel on assemble au moins deux bandes de matériau liant hydrosoluble avec au moins trois bandes d'ouate de cellulose, les bandes de matériau liant hydrosoluble étant interposées entre les bandes d'ouate de cellulose.

3. Procédé selon l'une des revendications précédentes, comprenant au moins une étape selon laquelle on dispose une bande de matériau liant hydrosoluble (F, F1, F2) sur une bande d'ouate de cellulose (B1, B2, B3) et on humidifie (7, 7', 8, 10, 10') la bande de matériau liant hydrosoluble avant de poser une bande d'ouate de cellulose sur ladite bande de matériau liant hydrosoluble.

4. Procédé selon l'une des revendications précédentes selon lequel on associe des bandes d'ouate de cellulose comprenant ensemble de 2 à 24 plis d'ouate de cellulose, de préférence de 2 à 10 plis d'ouate de cellulose.

5. Procédé selon la revendication 4 dont la quantité de liant hydrosoluble apporté représente à sec de 20 à 70% en poids de la feuille finie, et de préférence de 25% à 50% en poids de la feuille.

6. Procédé selon l'une des revendications précédentes dont le liant hydrosoluble comprend de l'amidon et/ou de l'alcool polyvinylique.

7. Procédé selon l'une des revendications précédentes dont le grammage de la feuille finie est compris entre 80 et 400 g/m².

8. Procédé selon la revendication 1 selon lequel on calandre la feuille avant séchage ou après séchage pour obtenir une feuille d'épaisseur comprise entre 0,3 et 1,2 mm.

9. Utilisation de la feuille finie, obtenue selon le procédé de l'une des revendications précédentes pour la fabrication d'un mandrin support de rouleau par enroulement en hélice autour d'un cylindre d'une ou plusieurs bandes venues de ladite feuille.

10. Feuille de papier délitable dans l'eau obtenue selon l'une des revendications 1 à 8 de grammage compris entre 80 et 400 g/m² contenant de 20 à 70% d'un liant hydrosoluble tel que l'amidon ou l'alcool polyvinylique.

11. Mandrin pour rouleau, constitué d'un enroulement en hélice d'une ou plusieurs bandes de papier, dont la dite bande est une feuille selon la revendication 10.

## Patentansprüche

1. Verfahren zur Herstellung eines in Wasser löslichen Papierbogens, das die folgenden Schritte umfasst: Zuführen mindestens eines Streifens wasserlöslichen Bindermaterials (F) in Form eines Trockenfilms, Zuführen von mindestens zwei Streifen (B1, B2), die jeweils aus mindestens einer Cellulosewatteschicht gebildet sind, Anordnen des Streifens aus wasserlöslichem Bindermaterial zwischen den beiden Cellulosewattestreifen, Befeuchten (7, 7', 8, 10, 10'), Zusammenfügen (3, 5) und Pressen der drei Streifen, Trocknen des erhaltenen mehrschichtigen Streifens.

2. Verfahren nach dem vorhergehenden Anspruch, wobei mindestens zwei Streifen aus wasserlöslichem Bindermaterial mit mindestens drei Cellulosewattestreifen zusammengefügt werden, wobei die Streifen aus wasserlöslichem Bindermaterial zwischen die Cellulosewattestreifen eingefügt werden.

3. Verfahren nach einem der vorhergehenden Ansprüche, das mindestens einen Schritt umfasst, bei dem ein Streifen aus wasserlöslichem Bindermaterial (F, F1, F2) auf einem Cellulosewattestreifen (B1, B2, B3) angeordnet wird und der Streifen aus wasserlöslichem Bindermaterial befeuchtet wird (7, 7', 8, 10, 10'), bevor ein Cellulosewattestreifen auf den Streifen aus wasserlöslichem Bindermaterial gelegt wird.

4. Verfahren nach einem der vorhergehenden Ansprüche, wobei Cellulosewattestreifen zusammengefügt werden, die zusammen 2 bis 24 Cellulosewatteschichten, bevorzugt 2 bis 10 Cellulosewatteschichten umfassen.

5. Verfahren nach Anspruch 4, bei dem die zugegebene Menge an wasserlöslichem Binder trocken 20 bis 70 Gew.-% des fertigen Bogens und bevorzugt 25 Gew.-% bis 50 Gew.-% des Bogens darstellt.

6. Verfahren nach einem der vorhergehenden Ansprüche, bei dem der wasserlösliche Binder Stärke und/oder Polyvinylalkohol umfasst.

7. Verfahren nach einem der vorhergehenden Ansprüche, bei dem das Flächengewicht des fertigen Bogens im Bereich zwischen 80 und 400 g/m² liegt.

8. Verfahren nach Anspruch 1, wobei der Bogen vor dem Trocknen oder nach dem Trocknen kalandriert wird, um einen Bogen mit einer Dicke im Bereich zwischen 0,3 und 1,2 mm zu erhalten.

9. Verwendung des fertigen Bogens, der gemäß dem Verfahren nach einem der vorhergehenden Ansprüche erhalten wurde, zur Herstellung einer Rollenhalterhülse durch spiralförmiges Aufwickeln eines oder mehrerer aus dem Bogen stammender Streifen um einen Zylinder herum.

10. In Wasser löslicher Papierbogen, der gemäß einem der Ansprüche 1 bis 8 erhalten wurde, mit einem Flächengewicht im Bereich zwischen 80 und 400 g/m², der 20 bis 70 % eines wasserlöslichen Binders, wie etwa Stärke oder Polyvinylalkohol enthält.

11. Rollenhülse, die durch das spiralförmige Aufwickeln einer oder mehrerer Papierstreifen gebildet wird, bei dem der Streifen ein Bogen nach Anspruch 10 ist.

## Claims

1. Method for manufacturing a sheet of paper that disintegrates in water, comprising the following steps: supplying at least one strip of water-soluble binder material (F) in the form of a dry film, supplying at least two strips (B1, B2) each formed from at least one ply of tissue, placing the strip of water-soluble binder material between the two strips of tissue, wetting (7, 7', 8, 10, 10'), joining (3, 5) and pressing the three strips, drying the complex strip obtained.

2. Method according to the preceding claim, in which at least two strips of water-soluble binder material are joined with at least three strips of tissue, the strips of water-soluble binder material being inserted between the strips of tissue.

3. Method according to either of the preceding claims, comprising at least one step in which a strip of water-soluble binder material (F, F1, F2) is placed on a strip of tissue (B1, B2, B3) and the strip of water-soluble binder material is wetted (7, 7', 8, 10, 10') before placing a strip of tissue on said strip of water-soluble binder material.

4. Method according to one of the preceding claims, in which strips of tissue are joined, together comprising 2 to 24 plies of tissue, preferably 2 to 10 plies of tissue.

5. Method according to Claim 4, in which the quantity of water-soluble binder added represents when dry 20 to 70% by weight of the finished sheet, and preferably 25% to 50% by weight of the sheet.

6. Method according to one of the preceding claims, in which the water-soluble binder comprises starch and/or polyvinyl alcohol.

7. Method according to one of the preceding claims, in which the basis weight of the finished sheet is between 80 and 400 g/m².

8. Method according to Claim 1, in which the sheet is calendered before drying or after drying to obtain a sheet having a thickness between 0.3 and 1.2 mm.

9. Use of the finished sheet, obtained by the method according to one of the preceding claims, for manufacturing a roll support core by helical winding of one or more strips taken from said sheet around a cylinder.

10. Sheet of paper that disintegrates in water, obtained according to one of Claims 1 to 8, having a basis weight of between 80 and 400 g/m², containing 20 to 70% of a water-soluble binder such as starch or polyvinyl alcohol.

11. Core for rolls, consisting of a helical winding of one or more strips of paper, in which said strip is a sheet according to Claim 10.
